# EUROPEAN PATENT APPLICATION

(11) **EP 4 553 869 A2**
(43) Date of publication of application: **14.05.2025**
(21) Application number: 24196989.8
(22) Date of filing: 28.08.2024
(51) Int. Cl.: H01G 4/232, H01G 4/012, H01G 4/30, H01G 4/12, H01G 4/008

(54) **MULTILAYER ELECTRONIC COMPONENT**

(30) Priority: 12.10.2023 KR 20230135880
(71) Applicant: Samsung Electro-Mechanics Co., Ltd., Gyeonggi-do (KR)
(72) Inventor: Ahn, Seung Min, Suwon-si, Gyeonggi-do (KR); Yun, Hyung Duk, Suwon-si, Gyeonggi-do (KR); Lee, Dong Hyeon, Suwon-si, Gyeonggi-do (KR); Jeon, Byung Jun, Suwon-si, Gyeonggi-do (KR); Park, Chae Min, Suwon-si, Gyeonggi-do (KR); Kwag, Joon Hwan, Suwon-si, Gyeonggi-do (KR); Kim, Hong Seok, Suwon-si, Gyeonggi-do (KR)
(74) Representative: Grünecker Patent- und Rechtsanwälte PartG mbB

(57) **Abstract**

A multilayer electronic component of the present disclosure may include: a body including a dielectric layer and internal electrodes alternately disposed with the dielectric layer; a connection portion disposed in an end of the internal electrode; an interface plating layer disposed to contact at least a portion of an end of the dielectric layer disposed between the internal electrodes and to cover the connection portion; and an external electrode disposed on the interface plating layer, wherein the connection portion may have a different crystal structure from the internal electrode.

## Description

### CROSS-REFERENCE TO RELATED APPLICATION(S)

This application claims benefit of priority to Korean Patent Application No. 10-2023-0135880 filed on October 12, 2023, in the Korean Intellectual Property Office, the disclosure of which is incorporated herein by reference in its entirety.

### TECHNICAL FIELD

The present disclosure relates to a multilayer electronic component.

A multilayer ceramic capacitor (MLCC), a multilayer electronic component, is a chip-type condenser mounted on the printed circuit boards of various electronic products, such as image display devices including a liquid crystal display (LCD) and a plasma display panel (PDP), computers, smartphones and mobile phones, serving to charge or discharge electricity therein or therefrom.

The multilayer ceramic capacitor may be used as a component in various electronic devices due to having a small size, ensuring high capacitance and being easily mounted.

Recently, as an electronic device is miniaturized and implemented with higher levels of performance, the multilayer ceramic capacitor is also trending toward miniaturization and higher capacitance, and according to this trend, the importance of securing high reliability of the multilayer ceramic capacitor is increasing.

In general, in order to thin an internal electrode, it is necessary to use finer metal powder particles than before, and when using the fine metal powder particles, because a contraction initiation temperature moves to lower temperatures, differences in contraction behavior may occur between the internal electrode and a dielectric layer. In this case, because a contraction rate of the internal electrode is greater than that of the dielectric layer, a problem may occur in which the connectivity between the internal electrode and the external electrode may be deteriorated.

Additionally, when forming the external electrode, metals included in the external electrode may diffuse to the internal electrode, which may form radiation cracks due to volume expansion of the internal electrode.

Improvement of the connectivity between the internal electrode and the external electrode and suppression of radiation cracks have conventionally been considered a trade-off relationship. Accordingly, while improving the connectivity between the internal electrode and the external electrode, there is a need for new methods to suppress radiation cracks.

### SUMMARY

An aspect of the present disclosure is to provide a multilayer electronic component having excellent reliability.

An aspect of the present disclosure is to improve electrical connectivity between an internal electrode and an external electrode.

An aspect of the present disclosure is to suppress radiation cracks in a multilayer electronic component.

However, the aspects of the present disclosure are not limited to the above-described contents, and may be more easily understood in the process of describing specific embodiments of the present disclosure.

According to an aspect of the present disclosure, a multilayer electronic component may include: a body including a dielectric layer and internal electrodes alternately disposed with the dielectric layer; a connection portion disposed in an end of the internal electrode; an interface plating layer disposed to contact at least a portion of an end of the dielectric layer disposed between the internal electrodes and to cover the connection portion; and an external electrode disposed on the interface plating layer, wherein the connection portion has a different crystal structure from the internal electrode.

As one of various effects of the present disclosure, a connection portion may be disposed in an end of an internal electrode, and an interfacial plating layer disposed to contact at least a portion of an end of a dielectric layer and to cover the connection portion may be disposed, thereby improving reliability of a multilayer electronic component.

As one of various effects of the present disclosure, electrical connectivity between an internal electrode and an external electrode may be improved.

As one of various effects of the present disclosure, radiation cracks in a multilayer electronic component may be suppressed.

However, advantages and effects of the present disclosure are not limited to the above-described contents, and may be more easily understood in the process of describing specific embodiments of the present disclosure.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a perspective view schematically illustrating a multilayer electronic component according to an example embodiment of the present disclosure;
FIG. 2 is a schematic cross-sectional view taken along line I-I' of FIG. 1;
FIG. 3 is a schematic cross-sectional view of II-II' of FIG. 1;
FIG. 4 is a view illustrating a third surface of a body observed except for an external electrode and an interfacial plating layer in the multilayer electronic component of FIG. 1;
FIG. 5 is a view schematically illustrating a portion of the body of FIG. 2;
FIG. 6 is an enlarged view illustrating region K1 of FIG. 2;
FIG. 7 is an enlarged view illustrating region K2 of FIG. 2;
FIG. 8 is an enlarged view illustrating region K3 of FIG. 4.
FIG. 9 is a view corresponding to FIG. 6 according to an example embodiment of the present disclosure;
FIG. 10 is a view corresponding to FIG. 6 according to an example embodiment of the present disclosure;
FIG. 11 is a view corresponding to FIG. 6 according to an example embodiment of the present disclosure;
FIG. 12 is a view corresponding to FIG. 8 according to an example embodiment of the present disclosure;
FIG. 13 is a view corresponding to FIG. 8 according to an example embodiment of the present disclosure;
FIG. 14 is a view corresponding to FIG. 8 according to an example embodiment of the present disclosure;
FIG. 15 is a view corresponding to FIG. 8 according to an example embodiment of the present disclosure;
FIG. 16 is a view corresponding to FIG. 2 according to an example embodiment of the present disclosure;
FIG. 17 is a view corresponding to FIG. 2 according to an example embodiment of the present disclosure;
FIG. 18 is a view illustrating a twin structure of a connection portion; and
FIG. 19 is a view illustrating a crystal structure of an internal electrode.

### DETAILED DESCRIPTION

Hereinafter, example embodiments of the present disclosure will be described with reference to specific example embodiments and the attached drawings. The embodiments of the present disclosure may, however, be exemplified in many different forms and should not be construed as being limited to the specific embodiments set forth herein. The example embodiments disclosed herein are provided for those skilled in the art to better explain the present disclosure. Therefore, in the drawings, the shapes and dimensions of elements may be exaggerated for clarity, and the same reference numerals will be used throughout to designate the same or like elements.

In addition, in order to clearly describe the present disclosure in the drawings, contents unrelated to the description are omitted, and since sizes and thicknesses of each component illustrated in the drawings are arbitrarily illustrated for convenience of description, the present disclosure is not limited thereto. In addition, components with the same function within the same range of ideas are described using the same reference numerals. Throughout the specification, when a certain portion "includes" or "comprises" a certain component, this indicates that other components are not excluded and may be further included unless otherwise noted.

In the drawings, a first direction may be defined as a thickness T direction, a second direction may be defined as a length L direction, and a third direction may be defined as a width W direction.

### Multilayer Electronic Component

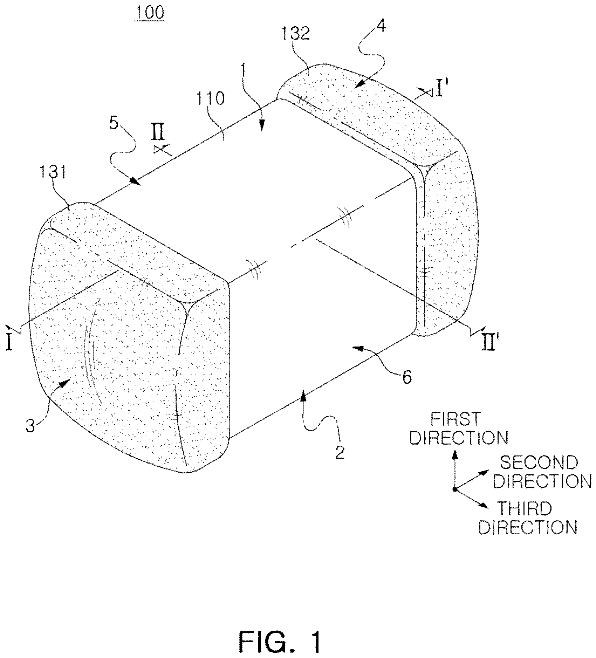

FIG. 1 is a perspective view schematically illustrating a multilayer electronic component according to an example embodiment of the present disclosure.

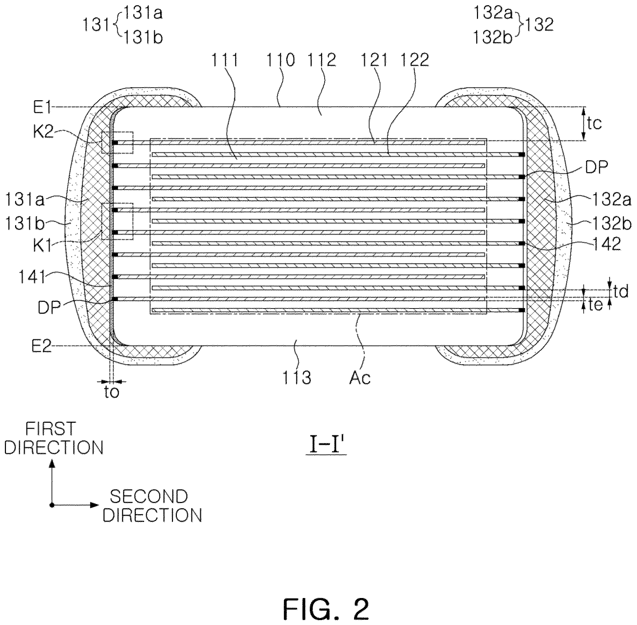

FIG. 2 is a schematic cross-sectional view taken along line I-I' of FIG. 1.

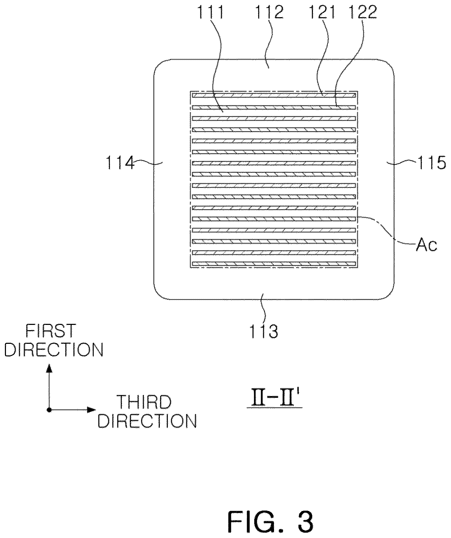

FIG. 3 is a schematic cross-sectional view of II-II' of FIG. 1.

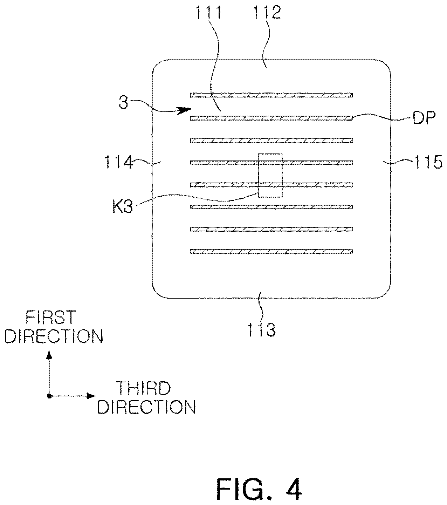

FIG. 4 is a view illustrating a third surface of a body observed except for an external electrode and an interfacial plating layer in the multilayer electronic component of FIG. 1.

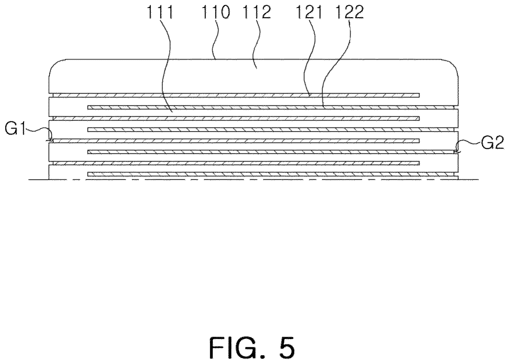

FIG. 5 is a view schematically illustrating a portion of the body of FIG. 2;

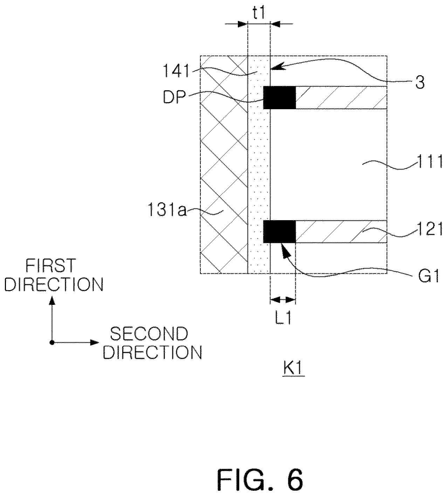

FIG. 6 is an enlarged view illustrating region K1 of FIG. 2.

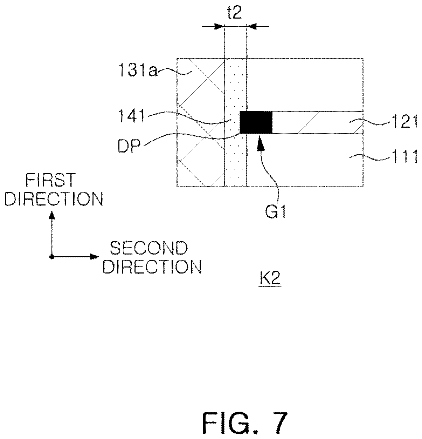

FIG. 7 is an enlarged view illustrating region K2 of FIG. 2.

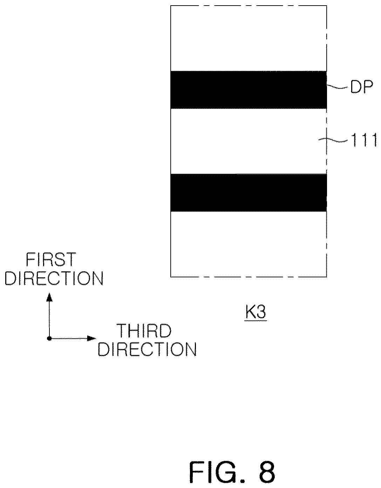

FIG. 8 is an enlarged view illustrating region K3 of FIG. 4.

Hereinafter, a multilayer electronic component 100 according to an example embodiment of the present disclosure will be described in detail with reference to FIGS. 1 to 8. Additionally, as an example of a multilayer electronic component, a multilayer ceramic capacitor (hereinafter referred to as 'MLCC') will be described, but the present disclosure is not limited thereto, and the multilayer electronic component 100 may also be applied to various multilayer electronic components using ceramic materials, such as an inductor, a piezoelectric element, a varistor, or a thermistor.

The multilayer electronic component 100 according to some example embodiments of the present disclosure may include a body 110 including a dielectric layer 111 and internal electrodes 121 and 122 alternately disposed with the dielectric layer; a connection portion DP disposed in an end of the internal electrode; interface plating layers 141 and 142 disposed to contact at least a portion of an end of the dielectric layer 111 disposed between the internal electrodes 121 and 122 and to cover the connection portion DP; and external electrodes 131 and 132 disposed on the interface plating layer.

Because the internal electrode and dielectric layer are formed of different materials, during sintering, differences in contraction behavior may occur between the internal electrode and the dielectric layer. In general, as the contraction initiation temperature of the internal electrode is lower than that of the dielectric layer, because a contraction rate of the internal electrode is greater than that of the dielectric layer, the connectivity between the internal electrode and the external electrode may be reduced.

Additionally, when forming the external electrode, the metal included in the external electrode may diffuse to the internal electrode, thus forming radiation cracks due to volume expansion of the internal electrode.

On the other hand, according to the present disclosure, the connectivity between the internal electrode and the external electrode may be improved by the connection portion DP disposed in the end of the internal electrode, and the interfacial plating layers 141 and 142 disposed on the connection portion DP may improve the connectivity between the internal electrode and the external electrode, so that radiation cracks may be suppressed by suppressing diffusion of metals included in the external electrode to the internal electrode.

Hereinafter, each configuration included in the multilayer electronic component 100 according to some example embodiments of the present disclosure will be described.

The body 110 may include dielectric layers 111 and internal electrodes 121 and 122 alternately stacked.

There is no particular limitation on a specific shape of the body 110, but as illustrated, the body 110 may have a hexahedral shape or a shape similar thereto. Due to contraction of ceramic powder particles included in the body 110 during a sintering process, the body 110 may not have a hexahedral shape with completely straight lines, but may have a substantially hexahedral shape.

The body 110 may have first and second surfaces 1 and 2 opposing each other in a first direction, third and fourth surfaces 3 and 4 connected to the first and second surfaces 1 and 2 and opposing each other in a second direction, and fifth and sixth surfaces 5 and 6 connected to the first and second surfaces 1 and 2, connected to the third and fourth surfaces 3 and 4, and opposing each other in a third direction.

As margin regions in which the internal electrodes 121 and 122 are not disposed overlap each other on the dielectric layer 111, a step portion due to a thickness of the internal electrodes 121 and 122 may occur, so that a corner connecting the first surface and the third to fifth surfaces and/or a corner connecting the second surface and the third to fifth surfaces may have a shape contracted toward a center of the body 110 in the first direction when viewed from the first surface or the second surface. Alternatively, due to the contraction behavior during the sintering process of the body, a corner connecting the first surface 1 and the third to sixth surfaces 3, 4, 5 and 6 and/or a corner connecting the second surface 2 and the third to sixth surfaces 3, 4, 5 and 6 may have a shape contracted toward a center of the body 110 in the first direction when viewed from the first surface or the second surface. Alternatively, in order to prevent chipping defects, the corners connecting each surface of the body 110 may be rounded by performing a separate process, so that the corner connecting the first surface and the third to sixth surfaces and/or the corner connecting the second surface and the third to sixth surfaces may have a rounded shape.

Meanwhile, in order to suppress a step portion caused by the internal electrodes 121 and 122, the internal electrodes after stacking may be cut to be exposed to the fifth and sixth surfaces 5 and 6 of the body, and then, when forming the margin portions 114 and 115 by stacking a single dielectric layer or two or more dielectric layers on both surfaces of a capacitance formation portion Ac in the third direction (width direction), a portion connecting the first surface to the fifth and sixth surfaces and a portion connecting the second surface to the fifth and sixth surfaces may not have a contracted shape.

In a state in which a plurality of dielectric layers 111 forming the body 110 are sintered, boundaries between adjacent dielectric layers 111 may be integrated to a degree so as to be difficult to identify without using a scanning electron microscope (SEM). The number of dielectric layers is not particularly limited, and may be determined in consideration of the size of the stacked electronic component. For example, the body may be formed by stacking 400 or more dielectric layers.

The dielectric layer 111 may be formed by producing a ceramic slurry including ceramic powder particles, an organic solvent and a binder, applying and drying the slurry on a carrier film to prepare a ceramic green sheet, and then sintering the ceramic green sheet. The ceramic powder particles are not particularly limited as long as sufficient electrostatic capacitance may be obtained, but for example, barium titanate-based (BaTiO₃)-based powder particles may be used as the ceramic powder particles. For more specific examples, ceramic powder particles may be at least one selected from the group consisting of BaTiO₃, (Ba₁₋ₓCaₓ)TiO₃ (0<x<1), Ba(Ti_{1-y}Ca_{y})O₃ (0<y<1), (Ba₁₋ₓCaₓ)(Ti_{x-y}Zr_{y})O₃ (0<x<1, 0<y<1), and Ba(Ti_{1-y}Zr_{y})O₃ (0<y<1).

An average thickness td of the dielectric layer 111 in the first direction is not particularly limited, but may be, for example, 0.01 um to 10 um. Additionally, the average thickness td of the dielectric layer 111 may be arbitrarily set depending on the desired characteristics or purpose, and for example, in the case of small IT electronic components, in order to achieve miniaturization and high capacitance, the average thickness td of at least one of the plurality of dielectric layers 111 may be 0.4 um or less.

Here, the average thickness td of the dielectric layer 111 may refer to a first directional size of the dielectric layer 111 disposed between the internal electrodes 121 and 122. The average thickness of the dielectric layer 111 may be measured by scanning first and second directional cross-sections of the body 110 with a scanning electron microscope (SEM) of 10,000X magnification. More specifically, an average value may be measured by measuring the thickness at multiple areas of one dielectric layer 111, for example, 30 areas in which are spaced apart from each other at equal intervals in the second direction. The 30 areas with the equal intervals may be designated in the capacitance formation portion Ac to be described below. Additionally, when the average value is measured by extending an average value measurement up to 10 dielectric layers 111, an average thickness of the dielectric layers 111 may be further generalized.

The body 110 may include a capacitance formation portion Ac disposed inside the body 110 and configured to form a capacitance by including a first internal electrode 121 and a second internal electrode 122 disposed to face each other with the dielectric layer 111 interposed therebetween, and cover portions 112 and 113 formed above and below the capacitance formation portion Ac in the first direction.

Additionally, the capacitance formation portion Ac is a portion that contributes to forming the capacitance of a capacitor, and may be formed by repeatedly stacking a plurality of first and second internal electrodes 121 and 122 with a dielectric layer 111 therebetween.

The cover portions 112 and 113 may include an upper cover portion 112 disposed above the capacitance formation portion Ac in the first direction, and a lower cover portion 113 disposed below the capacitance formation part Ac in the first direction.

The upper cover portion 112 and the lower cover portion 113 may be formed by stacking a single dielectric layer or two or more dielectric layers in a thickness direction on upper and lower surfaces of the capacitance formation portion Ac, respectively, and may basically serve to prevent damage to the internal electrode due to physical or chemical stress.

The upper cover portion 112 and the lower cover portion 113 do not include internal electrodes and may include the same material as the dielectric layer 111.

That is, the upper cover portion 112 and the lower cover portion 113 may include a ceramic material, for example, a barium titanate (BaTiO₃)-based ceramic material.

Meanwhile, a thickness of the cover portions 112 and 113 in the first direction does not need to be particularly limited. However, in order to more easily achieve miniaturization and high capacitance of the multilayer electronic component, an average thickness of the cover portions in the first direction 112 and 113 may be 15 um or less.

An average thickness tc of the cover portions 112 and 113 may refer to a first directional size, and is a value obtained by averaging first directional sizes of the cover portions 112 and 113 measured at five areas spaced apart from each other by an equal interval in an upper portion or a lower portion of the capacitance formation portion Ac.

Additionally, the margin portions 114 and 115 may be disposed on a side surface of the capacitance formation portion Ac.

The margin portions 114 and 115 may include a first margin portion 114 disposed on the fifth surface 5 of the body 110 and a second margin portion 115 disposed on the sixth surface 6. That is, the margin portions 114 and 115 may be disposed on both end surfaces of the ceramic body 110 in a width direction.

As illustrated in FIG. 3, the margin portions 114 and 115 may refer to regions between both ends of the first and second internal electrodes 121 and 122 and a boundary surface of the body 110 in a cross-section obtained by cutting the body 110 in a width-thickness (W-T) direction.

The margin portions 114 and 115 may basically serve to prevent damage to the internal electrodes due to physical or chemical stress.

The margin portions 114 and 115 may be formed by forming internal electrodes by applying a conductive paste on a ceramic green sheet except for regions in which the margin portion is to be formed.

Additionally, in order to suppress a step portion caused by the internal electrodes 121 and 122, the internal electrode after stacking may be cut to be exposed to the fifth and sixth surfaces 5 and 6 of the body, and then, the margin portions 114 and 115 may be formed by stacking a single dielectric layer or two or more dielectric layers on both side surfaces of the capacitance formation portion Ac in the third direction (width direction).

Meanwhile, a width of the margin portions 114 and 115 in the third direction is not particularly limited. However, in order to more easily achieve miniaturization and high capacitance of the multilayer electronic component, an average width of the margin portions 114 and 115 in the third direction may be 15 um or less.

The average width of the margin portions 114 and 115 may refer to an average size of a region in which the internal electrode is spaced from the fifth surface, in the third direction, and an average size of a region in which the internal electrode is spaced from the sixth surface, in the third direction, and may be an average value obtained by averaging third directional sizes of the margin portions 114 and 115 measured at five areas spaced apart from each other by an equal interval on the side surface of the capacitance formation portion Ac.

Accordingly, in some example embodiments, each of the average sizes of the regions in which the internal electrodes 121 and 122 are spaced apart from the fifth and sixth surfaces, in the third direction, may be 15 um or less.

On the other hand, when applying a magnetic material instead of a dielectric material to the body 110, the multilayer electronic component may function as an inductor. The magnetic material may be, for example, ferrite and/or metallic magnetic particles. When the multilayer electronic component functions as an inductor, the internal electrode may be a coiled conductor.

Additionally, when applying a piezoelectric material instead of a dielectric material to the body 110, the multilayer electronic component may function as a piezoelectric element. A piezoelectric material may be, for example, PZT (lead zirconate titanate).

Additionally, when applying a ZnO-based or SiC-based material to the body 110 instead of a dielectric material, the multilayer electronic component may function as a variable resistor, and when applying a spinel-based material to the body 110 instead of a dielectric material, the multilayer electronic component may function as a thermistor.

That is, the multilayer electronic component 100 according to some example embodiments of the present disclosure may function not only as a multilayer ceramic capacitor, but also as an inductor, piezoelectric element, varistor, or thermistor, by appropriately changing a material or a structure of the body 110.

The internal electrodes 121 and 122 may be disposed alternately with the dielectric layer 111, and for example, the first internal electrode 121 and the second internal electrode 122, which are a pair of electrodes having different polarities, may be disposed to face each other with the dielectric layer 111 interposed therebetween. The first internal electrode 121 and the second internal electrode 122 may be electrically separated from each other by the dielectric layer 111 disposed therebetween. In this case, the internal electrodes 121 and 122 may be alternately disposed with the dielectric layer 111 in the first direction.

The first internal electrode 121 may be spaced apart from the fourth surface 4, but may extend toward the third surface 3. The second internal electrode 122 may be spaced apart from the third surface 3, but may extend toward the fourth surface 4. The first internal electrode 121 may be electrically connected to the first external electrode 131 on the third surface 3, and the second internal electrode 122 may be electrically connected to the second external electrode 132 on the fourth surface 4.

The conductive metal included in the internal electrodes 121 and 122 may be one or more selected from the group consisting of Ni, Cu, Pd, Ag, Au, Pt, Sn, W, Ti, and alloys thereof, and may include, Ni, but the present disclosure is not limited thereto.

A method of forming the internal electrodes 121 and 122 is not particularly limited. For example, the internal electrodes 121 and 122 may be formed by applying a conductive paste for internal electrodes including a conductive metal on a ceramic green sheet and sintering the conductive paste. The conductive paste for internal electrodes may be applied using screen printing or gravure printing, but the present disclosure is not limited thereto.

An average thickness te of the internal electrodes 121 and 122 in the first direction is not particularly limited, but may be, for example, 0.01 um to 3 um or less. Additionally, the average thickness te of the internal electrodes 121 and 122 may be arbitrarily set depending on desired characteristics or purposes, and for example, in the case of small IT electronic components, the average thickness te of at least one of the plurality of internal electrodes 121 and 122 may be 0.4 um or less to achieve miniaturization and high capacitance.

Here, the average thickness te of the internal electrode may be measured by scanning first and second directional cross-sections of the body 110 with a scanning electron microscope (SEM) of 10,000X magnification. More specifically, an average value may be measured by measuring the thickness at multiple areas of one internal electrode 121 or 122, for example, at 30 areas which are spaced apart from each other at equal intervals in the second direction. The 30 areas with the equal intervals may be designated in the capacitance formation portion Ac. Additionally, when the average value is measured by extending the average value measurement up to 10 internal electrodes 121 and 122, an average thickness of the internal electrodes 121 and 122 may be further generalized.

The external electrodes 131 and 132 may be disposed on the body 110 and connected to the internal electrodes 121 and 122, respectively.

As illustrated in FIG. 2, first and second external electrodes 131 and 132 disposed on the third and fourth surfaces 3 and 4 of the body 110, respectively, and connected to the first and second internal electrodes 121 and 122 through the interface plating layers 141 and 142 and the connection portion DP, respectively, may be included.

In some example embodiments, a structure in which the multilayer electronic component 100 has two external electrodes 131 and 132 is described, but the number or shape of the external electrodes 131 and 132 may be changed depending on the shape of the internal electrodes 121 and 122 or other purposes.

FIG. 6 is an enlarged view illustrating region K1 of FIG 2.

The region K1 is illustrated by enlarging a portion of an area in which the first external electrode 131 is disposed, but the first external electrode 131 and the second external electrode 132 may be different only in that the first external electrode 131 is disposed on the third surface and the second external electrode 132 is disposed on the fourth surface, and the constitutions of the first external electrode 131 and the second external electrode 132 may be similar to each other, and thus, hereinafter, the description will be provided based on the first external electrode 131, but this may be considered to include the description of the second external electrode 132. Additionally, the interface electrode layers 141 and 142 are also described based on the first interface electrode layer 141, but this may be considered to include the description of the second interface electrode layer 142.

The connection portion DP may have a different composition from a composition of the internal electrodes 121 and 122 and a different crystal structure from the internal electrodes 121 and 122, and may be disposed at the ends of the internal electrodes 121 and 122 to serve to improve electrical connectivity between the internal electrodes 121 and 122 and the external electrodes 131 and 132. Additionally, the connection portion DP may serve to suppress radiation cracks by improving mechanical properties.

In some example embodiments, the body 110 includes groove portions G1 and G2 in which the ends of the internal electrodes 121 and 122 are spaced apart from one surface of the body 110, and the connection portion DP may include a first region disposed in the groove portions G1 and G2 and a second region protruding onto one surface of the body.

The groove portions G1 and G2 may be formed by differences in contraction behavior between the internal electrodes 121 and 122 and the dielectric layer 111 in the sintering process of the body 110. When a sintering contraction rate of the internal electrodes 121 and 122 is greater than that of the dielectric layer 111, a problem may occur in which the connectivity between the internal electrodes 121 and 122 and the external electrodes 131 and 132 may be reduced due to the groove portions G1 and G2. Conventionally, in order to solve such a problem, a process of removing a protruding dielectric layer using a sandblasting method was added. On the other hand, according to some example embodiments of the present disclosure, since the connection portion DP includes the first region disposed in the groove portions G1 and G2 and the second region protruding from an outer surface of the body, the connectivity between the internal electrodes 121 and 122 and the external electrodes 131 and 132 may be improved without a separate polishing process.

Referring to FIG. 6, a length L1 of the groove portions G1 and G2 is not particularly limited, and because a difference in the contraction behavior between the internal electrodes 121 and 122 and the dielectric layer 111 may vary depending on the position of the body, the lengths of the groove portions may be different for each position.

In some example embodiments, the connection portion DP may have a twin structure, and the internal electrodes 121 and 122 may have a polycrystalline structure.

Here, the twin structure may refer to a structure including two or more symmetrically related crystals formed of the same material, and the polycrystalline structure may refer to a structure including multiple crystals with different orientations.

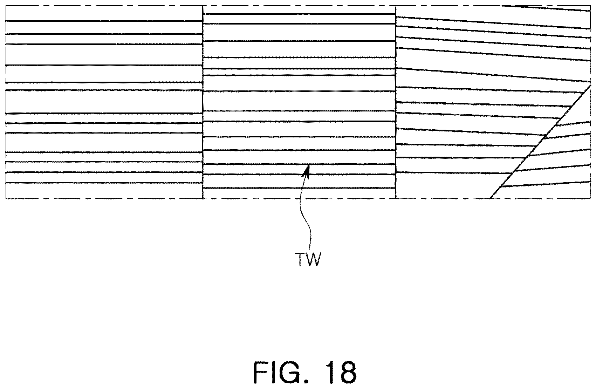

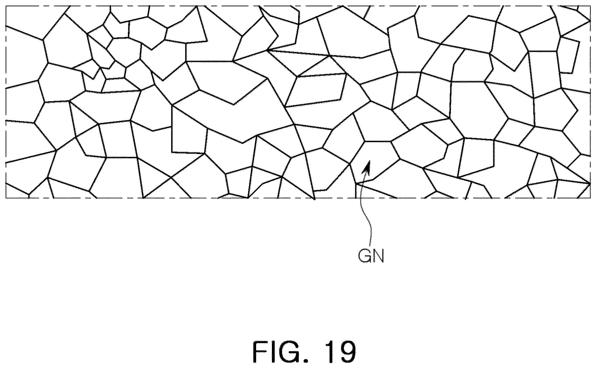

FIG. 18 is a view schematically illustrating a cross-section of a connection portion DP having a twin structure, and FIG. 19 is a view schematically illustrating a cross-section of internal electrodes 121 and 122 having a polycrystalline structure.

Referring to FIG. 18, a twin (TW) structure disposed in a horizontal interlayer shape may be observed in a cross-section of the connection portion DP, and a structure of polysynthetic twinning, a structure in which bonding surfaces of crystals are repeated parallel to each other, may be observed. Such a structure may be confirmed in an ion image of FIB obtained using Transmission Electron Microscope (TEM)/Focused Ion Beam (FIB). On the other hand, referring to FIG. 19, in the cross-section of the internal electrodes 121 and 122, a structure formed of a plurality of crystal grains GN having different orientations may be observed.

As the connection portion DP has the twin structure, strength and ductility may be improved simultaneously, and mechanical properties may be further improved.

Additionally, as the connection portion DP has the twin structure, when the interface plating layers 141 and 142 are formed by plating, the interface plating layers 141 and 142 may grow uniformly. When the plating is performed directly on the internal electrode having the polycrystalline structure, since a plating layer grows in a dendrite shape, it may be difficult for the plating layer to grow uniformly, but when the plating is performed on the connection portion DP having the twin structure, the plating layer may grow uniformly, thereby making it possible to more easily form the interface plating layers 141 and 142.

In some example embodiments, the connection portion DP and the internal electrodes 121 and 122 include Ni, Ni included in the connection portion DP may have the twin structure, and Ni included in the internal electrodes 121 and 122 may have the polycrystalline structure.

Although the connection portion DP and the internal electrodes 121 and 122 have different crystal structures, as Ni, which is the same metal, is included, the connection portion DP may be formed more easily and electrical connectivity may be improved.

FIG. 4 is a view illustrating a third surface of the body of the multilayer electronic component of FIG. 1, excluding the external electrode and the interface plating layer, FIG. 8 is an enlarged view of region K3 of FIG. 4, and FIG. 6 is an enlarged view of region K1 of FIG. 2. Referring to FIGS. 6 and 8, in some example embodiments, the connection portion DP may be disposed to fill all of the groove portions G1 and G2.

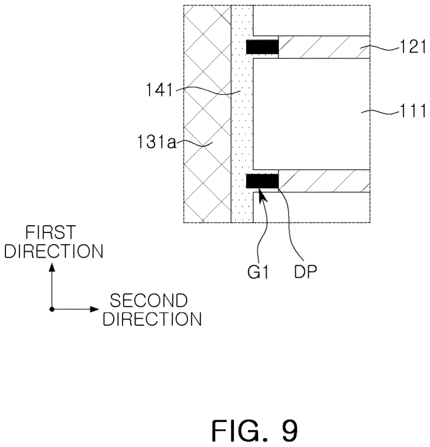

However, the present disclosure is not limited thereto, as illustrated in FIG. 9, in an example embodiment, the connection portion DP may be spaced apart from the dielectric layer 111.

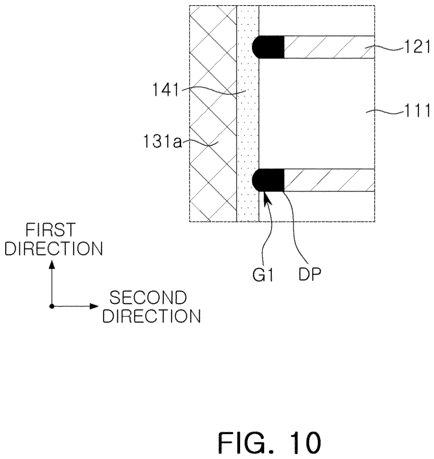

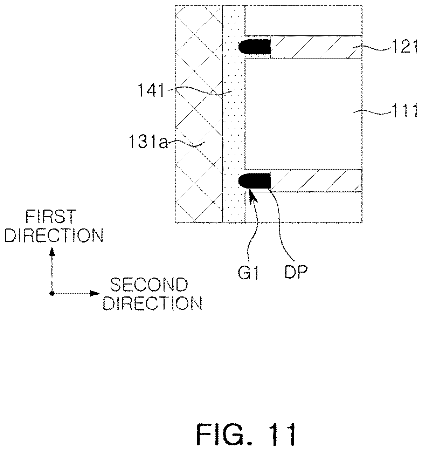

Additionally, as illustrated in FIG. 10, in some example embodiments, the second region of the connection portion DP may have a semicircular shape in the cross-section in the first and second directions of the multilayer electronic component. In this case, the first region of the connection portion DP may be disposed to completely fill the groove portions G1 and G2 as illustrated in FIG. 10, and the first region of the connection portion DP may be spaced apart from the dielectric layer 111 as shown in FIG. 11.

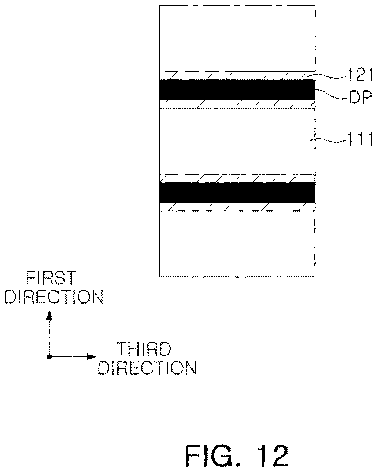

When the connection portion DP is spaced apart from the dielectric layer 111 as illustrated in FIGS. 9 and 11, in a case of observing the third side of the body, the connection portion DP may be disposed in a stripe shape as illustrated in FIG. 12.

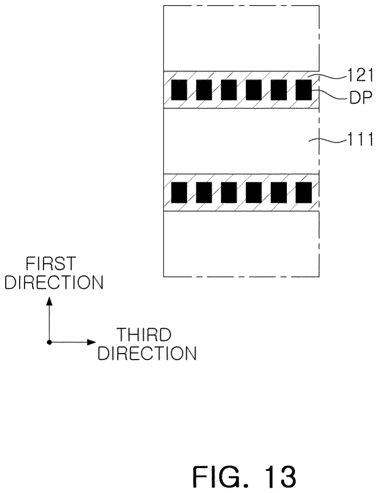

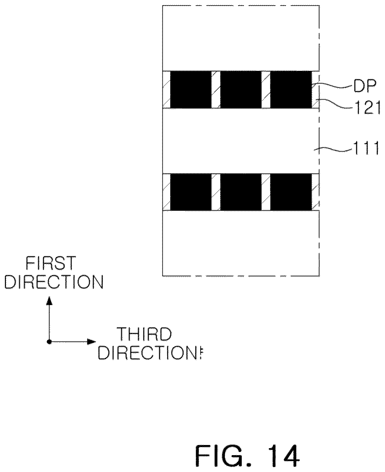

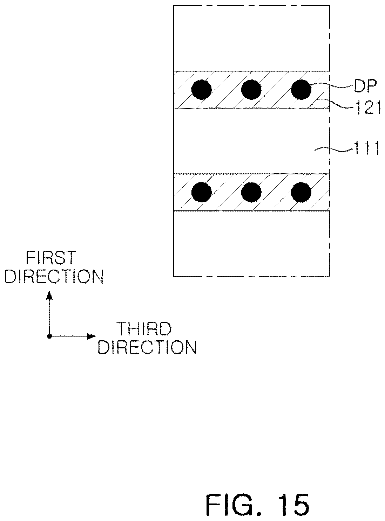

Meanwhile, as illustrated in FIGS. 13 to 15, the connection portion DP may be disposed in an island shape in which a plurality of connection portions spaced apart from each other are disposed on the end of the internal electrode. In this case, the plurality of connection portions may be observed to be square as illustrated in FIGS. 13 and 14 and may have a square pillar shape, or may be observed to be circular as illustrated in FIG. 15 and may have a circular pillar shape.

A method of forming the connection portion DP is not particularly limited. However, in order for the connection part DP to have the twin structure, it may be advantageous to form the connection portion DP by controlling a deposition rate using a deposition method such as sputtering, atomic layer deposition (ALD), thermal evaporation, or E-beam evaporation. Additionally, in order to form a connection portion DP in a desired shape, among the various types of connection portions DP described above, photo lithography or e-beam lithography may be used.

The interface plating layers 141 and 142 may be disposed to contact at least a portion of an end of the dielectric layer 111 disposed between the internal electrodes 121 and 122 and to cover the connection portion DP.

The interface plating layers 141 and 142 may be connected to the connection portion DP, and may serve to improve electrical connectivity between the internal electrodes 121 and 122 and the external electrodes 131 and 132, respectively. Additionally, the interface plating layers 141 and 142 may prevent the metal components of the external electrodes 131 and 132 from diffusing into the internal electrodes 121 and 122, respectively, thereby suppressing radiation cracks caused by volume expansion of the internal electrodes. The interface plating layers 141 and 142 may include a first interface plating layer 141 disposed on the third surface and a second interface plating layer 142 disposed on the fourth surface.

In some example embodiments, the interface plating layers 141 and 142 may have an amorphous structure. A crystalline structure refers to a structure that may express a lattice structure, using symmetry elements such as translation, rotation, reflection, and inversion in long-range periodicity in a three-dimensional grid structure. The twin structure of the above-mentioned connection portion and the polycrystalline structure of the internal electrode correspond to such a crystalline structure.

On the other hand, the amorphous structure does not have long-range periodicity, but may refer to a structure in which atomic structures as basic units are connected and are repeated in a short-range order.

As the interface plating layers 141 and 142 have the amorphous structure, diffusion of the metal components of the external electrodes 131 and 132 into the internal electrodes 121 and 122 may be more effectively suppressed.

In some example embodiments, the interface plating layers 141 and 142 may include Ni and P. Accordingly, the interface plating layers 141 and 142 may be easily controlled to have the amorphous structure, and may easily prevent metals of the external electrode from diffusing into the internal electrode.

In this case, a mass ratio of a P content to a Ni content included in the interface plating layers 141 and 142 may be about 8% or more and about 15% or less. When the mass ratio of the P content to the Ni content included in the interface plating layers 141 and 142 is more than 15%, the equivalent series resistance (ESR) between the internal electrodes and the external electrode may be increased, and when the mass ratio is less than 8%, as a thermal expansion coefficient of the interface plating layers 141 and 142 increases, a difference in a thermal expansion coefficient from the body may increase at high temperatures, so that bonding force between the interface plating layer and the body may be weakened.

In some example embodiments, the interface plating layers 141 and 142 may include Ni and B. Accordingly, the interface plating layers 141 and 142 may be easily controlled to have the amorphous structure, and may easily suppress the diffusion of metals from the external electrode to the internal electrode.

In this case, a mass ratio of a B content to a Ni content included in the interface plating layers 141 and 142 may be about 2.5% or more and about 10% or less. Accordingly, the charge transfer resistance of the interface plating layers 141 and 142 may be increased to improve corrosion resistance due to external moisture exposure, moisture penetration, and the like.

Meanwhile, analysis of elements included in the interface plating layers 141 and 142 may be performed by measuring first and second directional cross-sections passing through a center of the body 110 in the third direction using scanning electron microscopy (SEM) and dispersive spectroscopy (EDS). After measuring a content of each element in a central portion of five or more interface plating layers 141 and 142 using EDS, an average value of each element may be obtained, and then, the mass ratio of the P content to the Ni content or the mass ratio of the B content to the Ni content may be obtained using the average value.

Referring to FIGS. 6 and 7, when a thickness of the interface plating layer 141 measured in a central region of the body 110 in the first direction is referred to as t1, and when a thickness of the interface plating layer 141 measured in the internal electrode 121 disposed on an outermost side based on the first direction among the internal electrodes is referred to t2, t2/t1 may be 0.9 or more and 1.1 or less. That is, the interface plating layer 141 may have a uniform thickness based on the first direction. The t1 and t2 may refer to the sizes of the interface plating layers 141 and 142 in the second direction, and the first and second directional cross-sections of the interface plating layer 141 cut from the center of the body 110 in the third direction may be measured from images captured with a scanning electron microscope (SEM).

An average thickness of the interface plating layers 141 and 142 is not particularly limited. However, in some example embodiments, the average thickness to of the interface plating layers 141 and 142 may be 0.5 um or more and 3.0 um or less. When the average thickness to of the interface plating layers 141 and 142 is less than 0.5 um, there may be a concern that the metals of the external electrode may spread through the interface plating layer. Additionally, when the average thickness to of the interface plating layers 141 and 142 is more than 3.0 um, it may be difficult to control the thickness of the internal electrode in ultra-small models smaller than 0201 size.

The average thickness to of the interface plating layers 141 and 142 may refer to an average size of the interface plating layers 141 and 142 in the second direction, and may be a value obtained by averaging second directional sizes measured at five areas spaced apart from each other by equal intervals in the first direction in first and second directional cross-sections of the interface plating layers 141 and 142 cut from the center of the body 110 in the third direction. Here, a thickness of the interface plating layers 141 and 142 may refer to a second directional distance between an internal surface of the interface plating layers 141 and 142 in contact with one surface of the body 110 and an external surface of the interface plating layers 141 and 142 in contact with the external electrodes 131 and 132.

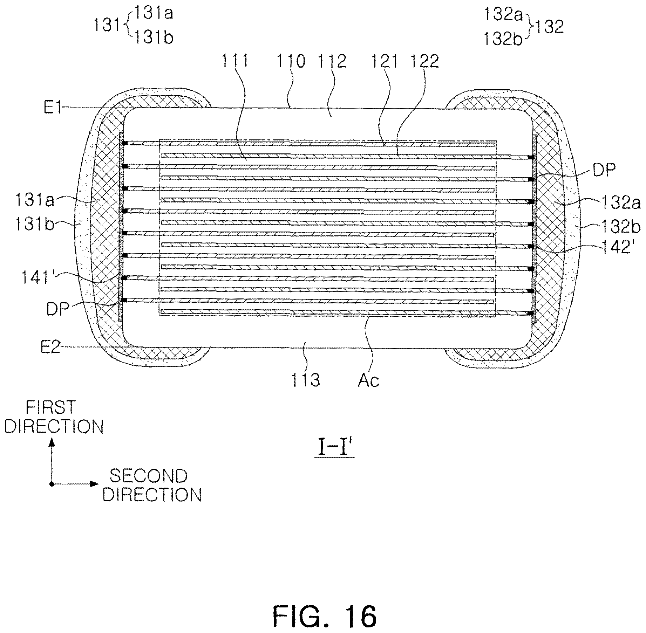

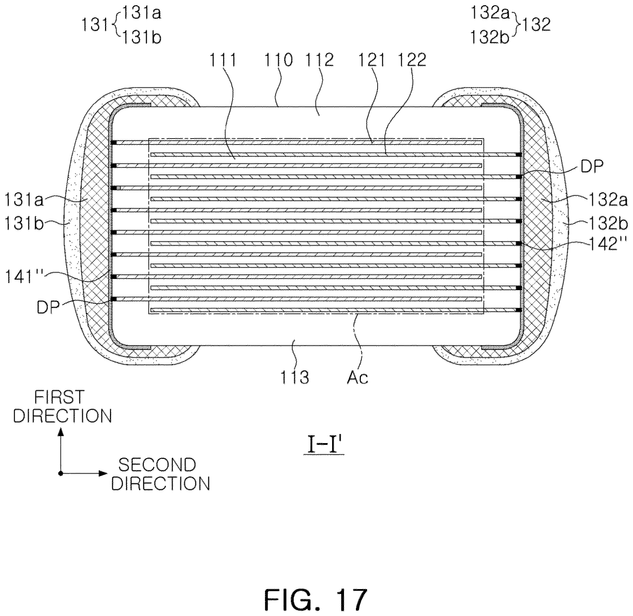

FIGS. 16 and 17 are cross-sectional views schematically illustrating a modified example of FIG. 2 and a multilayer electronic component according to some example embodiments of the present disclosure.

Referring to FIG. 16, a first interface plating layer 141' may cover a portion of the third surface 3, and a second interface plating layer 142' may cover a portion of the fourth surface 4. Accordingly, the first and second interface plating layers 141' and 142' may be disposed between an extension line E1 of the first surface and an extension line E2 of the second surface.

In this case, the interface plating layers 141' and 142' may be efficiently disposed to secure the effect of improving connectivity and suppressing cracks between the internal electrodes 121 and 122 and the external electrodes 131 and 132.

Referring to FIG. 17, a first interface plating layer 141'' may cover the third surface 3, and a second interface plating layer 142'' may cover the fourth surface 4, but the first and second interface plating layers 141'' and 142' ' may be disposed to extend on a portion of the first and second surfaces 1 and 2.

In this case, as the interface plating layers 141'' and 142'' extend onto portions of the first and second surfaces 1 and 2, corners of the body may be covered, so that a sufficient thickness of the external electrode may be easily secured in the corners of the body, thereby improving moisture resistance reliability.

The external electrodes 131 and 132 may include electrode layers 131a and 132a disposed on the interface plating layers 141 and 142, and plating layers 131b and 132b disposed on the electrode layers 131a and 132a. That is, the first external electrode 131 may include a first electrode layer 131a and a first plating layer 131b disposed on the first electrode layer 131a, and the second external electrode 132 may include a second electrode layer 132a and a second plating layer 132b disposed on the second electrode layer 132a.

The electrode layers 131a and 132a may be, for example, sintered electrode layers including metals and glass. Alternatively, the electrode layers 131a and 132a may be a conductive resin layer including metals and a resin. Alternatively, the electrode layers 131a and 132a may be thin film layers formed by a thin film forming method such as sputtering or vapor deposition. The electrode layers 131a and 132a may be, preferably, the above-described sintered electrode layers, but the present disclosure is not limited thereto, and the electrode layers 131a and 132a may include one or more of the sintered electrode layer, the conductive resin layer, and the thin film layer. However, when the electrode layers 131a and 132a are the sintered electrode layers including metals and glass, radiation crack suppression effects according to the present disclosure may be more remarkably achieved.

The metals included in the first electrode layers 131a and 132a may include Cu, Ni, Sn, Pd, Pt, Au, Ag, Pb, and/or alloys including the same, and may include, more preferably Cu, but the present disclosure is not limited thereto.

The plating layers 131b and 132b may improve mounting characteristics. The types of plating layers 131b and 132b are not particularly limited, and the plating layers 131b and 132b may be plating layers including Ni, Sn, Pd and/or an alloy including the same, and may be formed of a plurality of layers. The plating layers 131b and 132b may be, for example, Ni plating layers or Sn plating layers, and may be a form in which the Ni plating layer and the Sn plating layer are formed sequentially. Additionally, the plating layers 131b and 132b may include a plurality of Ni plating layers and/or a plurality of Sn plating layers.

Although the example embodiments of the present disclosure has been described in detail above, the present disclosure is not limited to the above-described embodiments and the accompanying drawings but is defined by the appended claims. Therefore, those of ordinary skill in the art may make various replacements, modifications, or changes without departing from the scope of the present disclosure defined by the appended claims, and these replacements, modifications, or changes should be construed as being included in the scope of the present disclosure.

In addition, the expression "an example embodiment" or "some example embodiments" used in the present disclosure does not mean the same embodiment, and is provided to emphasize and explain different unique characteristics. However, the embodiments presented above do not preclude being implemented in combination with the features of another embodiment. For example, although items described in a specific embodiment are not described in another embodiment, the items may be understood as a description related to another embodiment unless a description opposite or contradictory to the items is in another embodiment.

In the present disclosure, the terms are merely used to describe a specific embodiment, and are not intended to limit the present disclosure. Singular forms may include plural forms as well unless the context clearly indicates otherwise.

## Claims

1. A multilayer electronic component, comprising:
a body including a dielectric layer and internal electrodes alternately disposed with the dielectric layer;
a connection portion disposed at an end of the internal electrode;
an interface plating layer disposed on at least a portion of an end of the dielectric and the connection portion; and
an external electrode disposed on the interface plating layer,
wherein the connection portion has a different crystal structure from a crystal structure of the internal electrode.

2. The multilayer electronic component according to claim 1, wherein the body includes a groove portion in which the end of the internal electrode is spaced apart from one surface of the body, and
the connection portion includes a first region disposed in the groove portion and a second region protruding onto one surface of the body.

3. The multilayer electronic component according to claim 2, wherein the crystal structure of the connection portion has a twin structure, and
the internal electrode has a polycrystalline structure.

4. The multilayer electronic component according to claim 1, wherein the connection portion and the internal electrode include Ni,
Ni included in the connection portion has a twin structure, and
Ni included in the internal electrode has a polycrystalline structure.

5. The multilayer electronic component according to claim 2, wherein the connection portion is disposed to fill all of the groove portions.

6. The multilayer electronic component according to claim 2, wherein the connection portion is spaced apart from the dielectric layer.

7. The multilayer electronic component according to claim 2, wherein the body includes a plurality of connection portions spaced apart from each other disposed on the end of the internal electrode.

8. The multilayer electronic component according to claim 7, wherein the plurality of connecting portions have a square pillar shape or a circular pillar shape.

9. The multilayer electronic component according to claim 2, wherein the internal electrodes are alternately disposed with the dielectric layer in a first direction, and the body includes first and second surfaces opposing each other in the first direction, third and fourth surfaces connected to the first and second surfaces and opposing each other in a second direction, and fifth and sixth surfaces connected to the first to fourth surfaces and opposing each other in a third direction, and
in first and second directional cross-sections of the multilayer electronic component, the second region has a semicircular shape.

10. The multilayer electronic component according to claim 1, wherein the interface plating layer include an amorphous structure.

11. The multilayer electronic component according to claim 1, wherein the interface plating layer includes Ni and P.

12. The multilayer electronic component according to claim 11, wherein a mass ratio of a P content to a Ni content included in the interface plating layer is 8% or more and 15% or less.

13. The multilayer electronic component according to claim 1, wherein the interface plating layer includes Ni and B.

14. The multilayer electronic component according to claim 13, wherein a mass ratio of a B content to a Ni content included in the interface plating layer is 2.5% or more and 10% or less.

15. The multilayer electronic component according to claim 1, wherein the internal electrodes are alternately disposed with the dielectric layer in a first direction, and the body includes first and second surfaces opposing each other in the first direction, third and fourth surfaces connected to the first and second surfaces and opposing each other in a second direction, and fifth and sixth surfaces connected to the first to fourth surfaces and opposing each other in a third direction, and
the interface plating layer is disposed on at least a part of the third surface and a part of the fourth surface of the body such that the interface plating layer is disposed between an extension line of the second surface and an extension line of the first surface.
